# FASCICULE DE BREVET EUROPEEN

(11) **EP 3 118 552 B1**
(45) Date de publication et mention de la délivrance du brevet: **29.08.2018**
(21) Numéro de dépôt: 16305832.4
(22) Date de dépôt: 01.07.2016
(51) Int. Cl.: F26B 11/04, F26B 17/28, F26B 23/00

(54) **INSTALLATION THERMIQUE DE SECHAGE DE MATIERE PATEUSE**
WÄRMEANLAGE ZUM TROCKNEN EINER PASTÖSEN MASSE
THERMAL INSTALLATION FOR DRYING PASTY MATERIAL

(30) Priorité: 02.07.2015 FR 1556266
(43) Date de publication de la demande: 18.01.2017
(73) Titulaire: Groupe H. Labbe, 77220 Tournan en Brie (FR)
(72) Inventeur: LABBE, Henri, 77220 Tournan-en-Brie (FR)
(74) Mandataire: Regimbeau

(56) Documents cités:
- EP-A1- 1 553 368
- FR-A1- 2 687 079

## Description

### DOMAINE TECHNIQUE GENERAL

La présente invention concerne une installation pour le séchage de produits pâteux, plus particulièrement de boues issues de l'épuration biologique.

### ETAT DE L'ART

Les boues d'épuration sont les principaux déchets produits par une station d'épuration à partir des effluents liquides. Ces sédiments résiduaires sont surtout constitués de bactéries mortes et de matière organique minéralisée.

Elles sont aujourd'hui valorisables en agriculture par épandage ou compostage. Elles peuvent aussi, avant l'épandage, être digérées par des bactéries anaérobies pour produire du biogaz (qui sera lui-même valorisé en électricité, chaleur, etc.) et le digestat sera épandu sur les terres (éventuellement après compostage). Elles peuvent aussi être incinérées, seules ou avec des ordures ménagères.

La valorisation (et de façon générale le conditionnement) des boues humides issues de l'épuration biologique implique leur séchage, qui s'effectue couramment par leur mise en contact avec des parois chaudes.

On connait ainsi des « sécheurs à contact indirect » comme les sécheurs à palettes ou à vis, les sécheurs à plateaux ou les sécheurs à disques. Dans cette technologie, l'énergie est transférée via une surface d'échange par conduction.

En particulier, le demandeur a développé l'installation décrite dans la demande EP1553368, qui apporte d'excellents résultats.

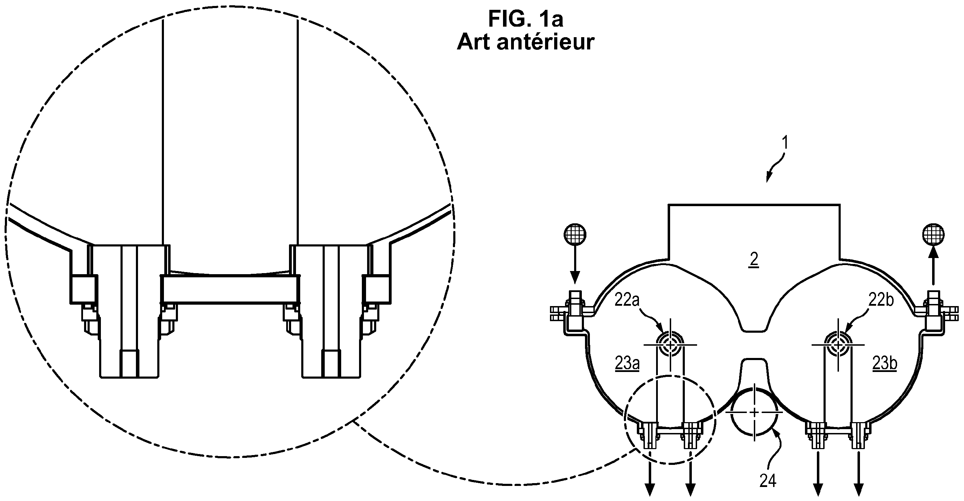

En référence à la **figure 1a** (et aux suivantes), cette installation 1 connue comprend une chambre 2 étanche à l'air qui contient un couple de rotors 20a, 20b horizontaux parallèles et côte à côte, lesquels comprennent chacun une série de bras 21a, 21b portés par des arbres horizontaux respectifs 22a, 22b et tournant entre des disques chauffants fixes 23a, 23b que les bras 21a, 21b raclent en tournant. Les axes de rotation des rotors 20a, 20b sont situés dans un même plan horizontal.

Ces deux rotors 20a, 20b déterminent entre eux un espace situé sous les arbres 22a, 22b des rotors 20a, 20b et où est logé un carter qui contient une vis de recyclage 24 horizontale dont l'axe est situé dans le plan de symétrie des rotors 20a, 20b.

Cette configuration permet la formation de couches minces de produits à sécher améliorant le coefficient d'échange avec la surface chauffante. L'installation procure un chauffage indirect sans air ni oxygène au contact du produit à sécher. Elle supprime donc les risques d'explosion liés aux hautes températures des produits secs, et permet un contrôle adéquat des conditions de recyclage.

Malgré toutes les innovations techniques mises en oeuvre, deux problèmes subsistent :
- La fiabilité mécanique est faible et nécessite une maintenance fréquente ;
- Le sécheur ne répond pas de façon satisfaisante au problème de consommation énergétique du séchage.

Il serait souhaitable de disposer d'une installation de séchage de nouvelle génération qui soit plus performante, plus rentable, plus fiable, et plus facile à utiliser à entretenir.

### PRESENTATION DE L'INVENTION

Selon un premier aspect, l'invention concerne une installation thermique de séchage de matière pâteuse, comprenant une chambre recevant ladite matière pâteuse, dans laquelle est disposée au moins une paire de rotors disposés côte à côte comprenant chacun un arbre portant des bras qui tournent entre des plateaux chauffant en les raclant, au moins un plateau chauffant étant un échangeur thermique creux au sein duquel circule un fluide caloporteur, et présentant une forme concave définissant un canal sensiblement radial pour le passage transversal d'un arbre ;
l'installation étant caractérisée en ce ledit canal s'étend sensiblement latéralement de sorte à définir au sein du plateau chauffant une partie supérieure et une partie inférieure séparées par ledit canal, dont une présente une entrée du fluide caloporteur, et l'autre présente une sortie de fluide caloporteur, lesdites entrée et sorties de fluide caloporteur s'étendant sensiblement latéralement de façon opposée au canal.

L'installation selon l'invention est avantageusement complétée par les caractéristiques suivantes, prises seules ou en une quelconque de leur combinaison techniquement possible :
- ledit plateau présente sensiblement une forme en « C » ;
- ledit plateau est solidaire d'une paroi latérale de la chambre, traversée par lesdites entrée et sortie de fluide caloporteur du plateau ;
- ladite paroi latérale est une paroi mobile distincte d'une paroi principale de la chambre, lesdites parois principale et latérale étant jointes de manière étanche lorsque l'installation est en fonctionnement ;
- l'ensemble formé d'au moins le plateau et la paroi latérale est adapté pour coulisser latéralement de sorte à dégager l'arbre du canal ;
- l'installation comprend une pluralité de blocs radiateurs chacun constitué d'une pluralité de plateaux identiques et d'une paroi latérale ;
- ledit fluide caloporteur est un fluide à changement de phase se condensant au moins partiellement dans les plateaux ;
- la partie supérieure du plateau chauffant présente une entrée du fluide caloporteur, et la partie inférieure du plateau chauffant présente une sortie de fluide caloporteur ;
- ledit fluide caloporteur est de la vapeur d'eau ;
- ladite vapeur d'eau provient des buées issues du chauffage de ladite matière pâteuse, l'installation comprenant un circuit de vapeur sur lequel sont disposés successivement :
   - des moyens d'aspiration des buées depuis la chambre ;
   - des moyens de compression ;
   - les plateaux chauffants.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- les figures 1a et 1b représentent des structures de plateau chauffants connues ;
- la figure 2 est un schéma global d'une installation thermique selon l'invention ;
- les figures 3a-3c représentent sous différentes vues un mode de réalisation préféré d'une chambre d'une installation selon l'invention ;
- les figures 4a-4b représentent sous différentes vues un mode de réalisation préféré d'un circuit de vapeur d'une installation selon l'invention ;
- la figure 5 représente un mode de réalisation préféré de moyens de purge d'une installation selon l'invention ;
- les figures 6a-6c représentent sous différentes vues un mode de réalisation préféré d'un dispositif d'introduction de matière pâteuse d'une installation selon l'invention ;
- les figures 7a-7c représentent sous différentes vues un mode de réalisation préféré de moyens de conditionnement de matière séchée d'une installation selon l'invention.

### DESCRIPTION DETAILLEE

### Architecture générale

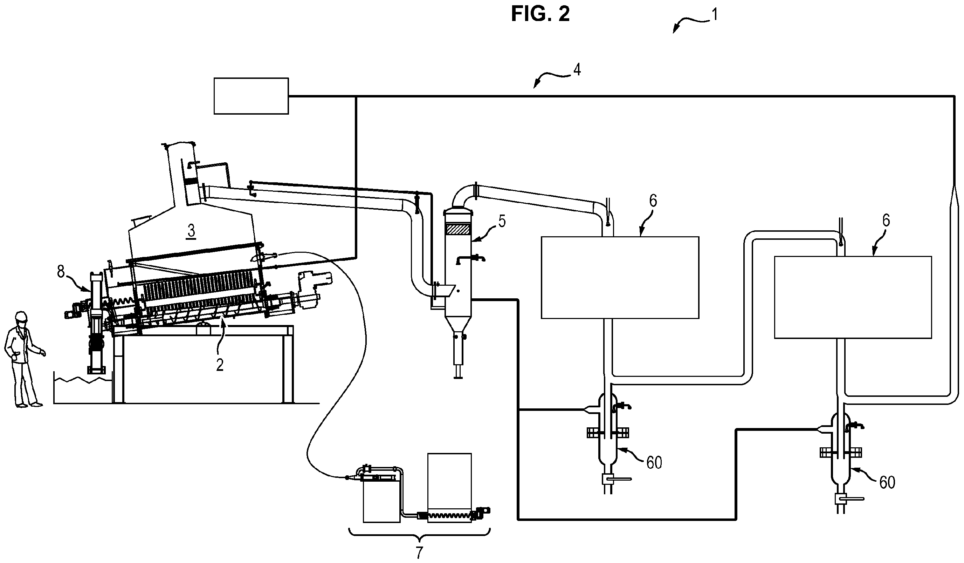

En référence à la **figure 2****,** l'invention concerne une installation thermique 1 de séchage de matière pâteuse.

La matière pâteuse comporte une fraction d'eau liquide typiquement comprise entre 50 et 90%. Il s'agit généralement de boues d'épuration, mais également de marc de café, de déchets organiques, etc. L'objectif est l'obtention de matière séchée comportant une fraction d'eau inférieure à 5% pour valorisation de la matière.

L'installation 1 comprend quatre modules principaux :
- une chambre 2 dans laquelle la matière pâteuse est chauffée (il s'agit de la partie également appelée « séchoir ») ;
- un dispositif d'introduction sous pression 7 de ladite matière pâteuse dans la chambre 2 ;
- un circuit de vapeur 4 ; et
- des moyens de conditionnement 8 de la matière pâteuse séchée issue de la chambre 2.

La présente installation 1 met en oeuvre ce que l'on appelle la « compression (ou recompression) mécanique de vapeur » (CMV). Cela signifie que la chaleur fournie à la matière pâteuse dans la chambre 2 est obtenue non pas par des moyens thermiques conventionnels tels qu'une résistance électrique ou un brûleur, mais par augmentation de la pression d'un fluide caloporteur gazeux, en particulier un fluide à changement de phase, en particulier de la vapeur d'eau.

En effet la compression d'un gaz permet de relever sa pression et sa température, et donc son enthalpie. Ainsi, le « moyen de chauffage » de la présente installation est au moins un compresseur 6 disposé sur le circuit de vapeur 4, avantageusement deux compresseurs 6 disposés successivement (éventuellement un compresseur bi-étagé) de sorte à mettre en oeuvre deux niveaux de compression comme représenté sur la figure 2.

De façon particulièrement préférée (cela sera discuté en détail plus loin), la vapeur recompressée est composée des buées issues du chauffage de ladite matière pâteuse, i.e. de la vapeur d'eau évaporée issue de l'humidité de la matière pâteuse à sécher.

En d'autres termes, on chauffe dans la chambre 2 la matière pâteuse, cela dégage des buées, qui sont compressées de sorte à chauffer la matière pâteuse, etc.

Ce cycle présente une excellente efficacité énergétique dans la mesure où il permet de valoriser la chaleur latente des buées. Il pose cependant une difficulté technique, qui est que la chambre 2 doit fonctionner de façon complètement étanche, malgré des entrées et des sorties en continu de matière pâteuse à sécher/séchée.

En effet, toute fuite ou toute entrée d'air vient diminuer mécaniquement la pression et/ou la température de vapeur d'eau, et diminue le rendement énergétique. Par ailleurs, dans le cas où la matière a séchée est par exemple composée de boues d'épuration, elle dégage des effluves qui peuvent présentent une odeur désagréable, voire être toxiques, et la moindre fuite pourrait avoir des conséquences sur le confort et la santé du personnel travaillant autour de l'installation de séchage.

Toutes les innovations de la présente installation 1 dont un mode de réalisation particulièrement préféré va être à présent décrit visent entre autres à garantir l'étanchéité de la chambre et la pureté des buées de sorte à maximiser le rendement de la CMV.

On comprendra que même si la CMV est particulièrement préférée (et dans la suite de la présente description on prendra l'exemple de la vapeur issue des buées), la présente installation peut utiliser n'importe que le fluide caloporteur, y compris des fluides thermiques classiques (sans changement de phase).

### Chambre de séchage

Les plateaux chauffants 23a, 23b de l'installation connue représentée par la figure 1a sont creux, et alimentés en vapeur chaude, qui se condense en transférant sa chaleur aux boues, les condensats étant évacués via des piquages en partie basse des plateaux 23a, 23b comme on le voit dans le détail en partie gauche de la figure 1a. Les deux plateaux 23a et 23b d'une paire de plateaux juxtaposés communiquent fluidiquement par leur partie médiane de sorte qu'un premier plateau 23a de la paire soit un point d'entrée de la vapeur, et que l'autre plateau 23b de la paire soit un point de sortie de la vapeur non condensée. Une forme en « U à l'envers » est donnée aux plateaux 23a, 23b pour que les arbres 22a, 22b ne passent pas « à l'intérieur » des plateaux 23a, 23b et que ces deniers puissent être retirés par translation, ceci impliquant néanmoins un arrêt et une vidange complète de l'installation pour démonter les raccords des tuyauteries. Cette forme en U définit quatre points bas de collecte des condensats par paire de plateaux 23a, 23b.

Ce choix structurel permet une purge complète des condensats (et donc utilisation maximum de la surface d'échange des plateaux), mais cause un certain nombre de difficultés significatives liées à la réalisation :
- du passage de toutes les tuyauteries des condensats en partie basse de la chambre 2 en garantissant l'étanchéité ;
- de la collecte de toutes les tuyauteries des condensats à l'extérieur du sécheur.

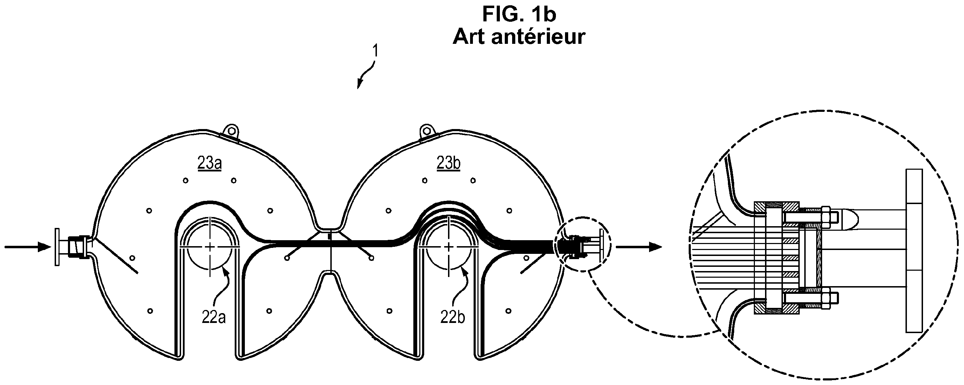

Alternativement, il a été proposé par le Demandeur, comme l'on voit sur la **figure 1b****,** une structure de plateaux 23a, 23b comprenant une pluralité interne de tuyauteries internes d'évacuation des condensats, en particulier quatre tuyaux (un pour chacun des quatre points bas d'une paire de plateaux 23a, 23b en « U »), de sorte à permettre un point commun de collecte des condensats et de la vapeur non condensée au niveau d'une « boite de sortie ». Cela simplifie sensiblement le système de tuyauterie, mais la purge devient quelquefois incomplète avec un passage préférentiel de la vapeur à travers une seule tuyauterie au lieu des quatre. La purge des condensats devient alors aléatoire, et si certaines de tuyauteries se bouchent les parties basses associées dans les plateaux se remplissent de condensats, ce qui diminue d'autant la surface d'échange thermique. De plus les « boites de sorties » sont des éléments techniquement complexes présentant une étanchéité difficile à réaliser, et la maintenance reste lourde.

Il serait souhaitable de disposer d'une nouvelle architecture simple, efficace, permettant sans faute une purge complète des plateaux chauffants, une étanchéité améliorée pour favoriser la CMV, et une maintenance largement facilitée.

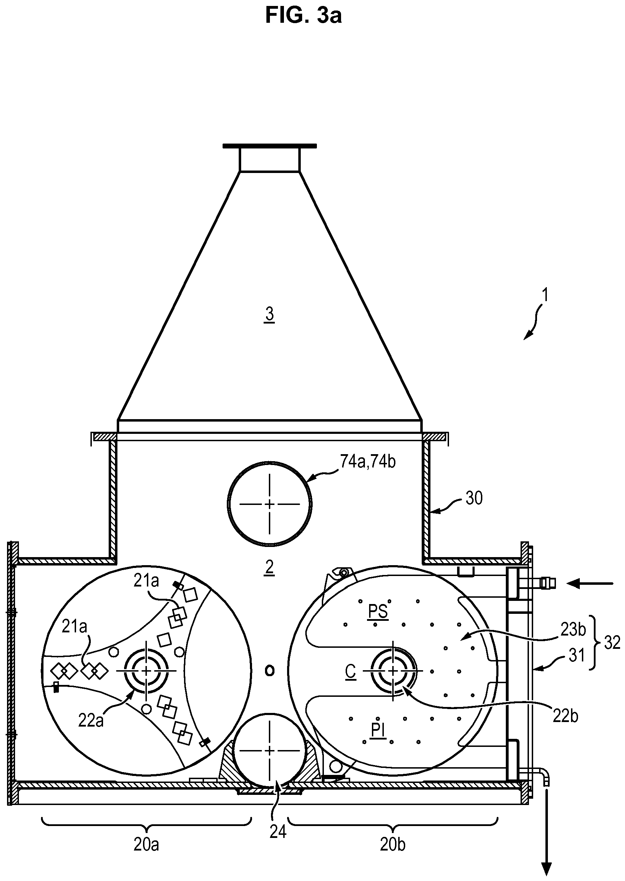

En référence aux **figures 3a-3c****,** est disposée dans la chambre 2 de la présente installation 1 au moins une paire de rotors 20a, 20b (avantageusement exactement une paire : rotor gauche 20a et un rotor droit 20b) parallèles disposés côte à côte, comprenant chacun un arbre 22a, 22b portant des bras 21a, 21a qui tournent entre des plateaux chauffant 23a, 23b en les raclant.

Comme l'on voit sur la figure 2a, chaque étage de rotor 20a, 20b comprend avantageusement une série de trois bras 21a, 21b. On a une alternance d'étages de rotor 20a, 20b entrainés en rotation par les arbres 22a, 22b et de plateaux 23a, 23b.

Les arbres 22a, 22b s'étendent dans un plan sensiblement horizontal (bien qu'avantageusement légèrement orienté vers le bas en allant vers l'arrière de la chambre 2 pour favoriser l'écoulement de la matière pâteuse, comme l'on verra plus tard), et les bras/plateaux 21a, 21b, 23a, 23b s'étendent dans un plan perpendiculaire (et donc sensiblement vertical).

Chaque plateau 23a, 23b est un échangeur thermique creux au sein duquel circule un fluide caloporteur en particulier à changement de phase (typiquement la vapeur d'eau recomprimée, comme expliqué), et présente une forme concave définissant un canal C sensiblement radial pour le passage transversal d'un arbre 22a, 22b, ce qui lui donne sensiblement une forme en « C ». Ce canal C permet que chaque plateau 23a, 23b puisse prendre sensiblement la forme d'un disque coïncidant avec la surface balayée par les bras 21a, 21, sans la nécessité d'enfiler les plateaux 23a, 23b sur l'arbre 22a, 22b. Le canal C présente à ce titre une largeur environ égale au diamètre de l'arbre 22a, 22b.

L'installation 1 préférée se distingue de l'art antérieur en ce que le canal C s'étend non pas vers le bas, comme l'on voyait sur les figures 1a, 1b, mais sensiblement latéralement. Plus précisément, le canal C est orienté vers le milieu de la chambre 2. En d'autres termes, les plateaux « gauche » 23a présentent un canal C orienté vers la droite, et les plateaux « droite » présente un canal C orienté vers la gauche.

Dans un cas comme dans l'autre, cela permet de définir au sein du plateau chauffant 23a, 23b une partie supérieure PS et une partie inférieure PI séparées par ledit canal C (qui correspondent schématiquement aux deux « moitiés » du « C » que forme chaque plateau 23a, 23b). La notion de « supérieur » et « inférieur » est ici relative à l'altitude : la partie supérieure PS est physiquement au-dessus de la partie inférieure PI. Cela permet éventuellement à du fluide caloporteur en phase liquide de ruisseler par gravité de la partie supérieure PS à la partie inférieure PI.

Comme l'on voit toujours sur la figures 3a, la partie supérieure PS présente une entrée du fluide caloporteur (sous forme gazeuse), et la partie inférieure PI présente une sortie de fluide caloporteur (sous forme liquide et/ou gazeuse s'il y a des incondensables), lesdites entrée et sorties de fluide caloporteur s'étendant sensiblement latéralement de façon opposée au canal C. De façon préférée, l'entrée est au point le plus haut du plateau 23a, 23b, et la sortie au point le plus bas.

Cela garantit une purge complète des plateaux 23a, 23b, et donc des performances maximales : il n'y a qu'une sortie possible pour les condensats, et pas de « zones mortes » possibles qui peuvent se remplir. De plus la réalisation des collecteurs d'arrivée vapeur et de sortie des condensats est facilité puisque il n'y a que deux tuyauteries à prévoir, et elles sont faciles d'accès.

On note que si le fluide caloporteur est un fluide thermique, de façon préférée les entrées et sorties sont inversées (la partie supérieure PS présente une sortie du fluide caloporteur, et la partie inférieure PI présente une entrée de fluide caloporteur). En effet, comme il n'y a pas de problèmes de condensats on utilise une circulation à contre-courant pour favoriser les échanges thermiques.

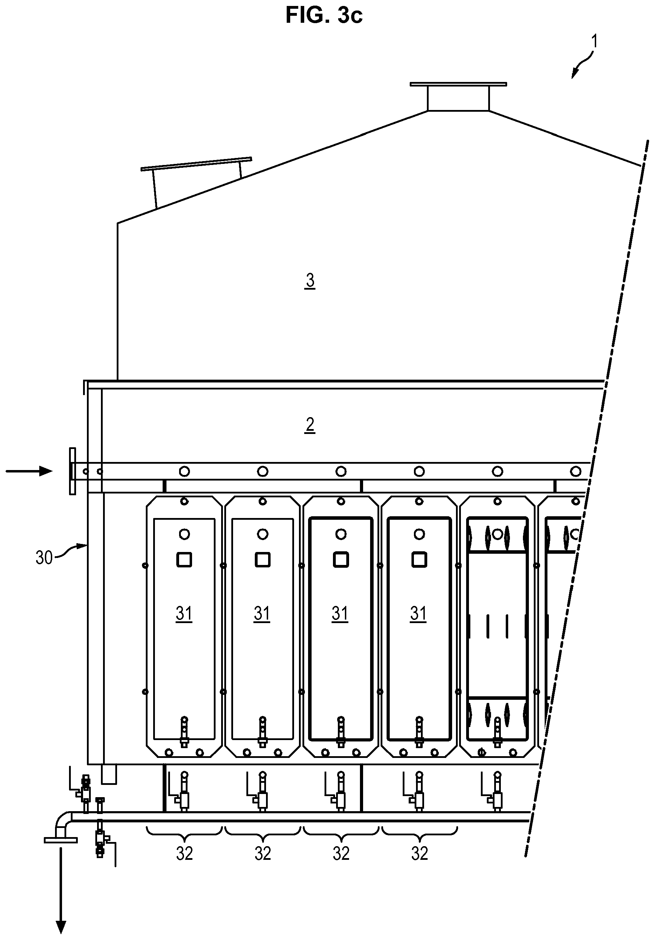

Par ailleurs, de façon encore plus préférée, le plateau 23a, 23b est solidaire d'une paroi latérale 31 (qui est verticale) de la chambre 2, traversée par lesdites entrée et sortie de fluide caloporteur du plateau 23a, 23b. En d'autres termes, les tuyauteries sont soudées à la paroi latérale, et il n'y a pas d'étanchéité particulière à prévoir à ce niveau puisque la paroi 31 ne peut pas se démonter des plateaux 23a, 23b. L'ensemble constitué d'une paroi latérale 31 et d'un ou plusieurs plateaux 23a, 23b identiques cote à cote (chacun séparés d'un étage de rotor 20a, 20b) et dont les entrées/sorties traverse la paroi verticale 31 est appelé un « bloc radiateur » 32. On en voit six successifs sur la figure 3c. De façon préférée, les blocs radiateurs 32 sont connecté en parallèle par un circuit commun d'entrée vapeur disposé au-dessus des parois latérales 31, et par un circuit commun de sortie condensats/incondensables disposé en dessous des parois latérales 31.

L'idée est que ladite paroi latérale 31 soit une paroi mobile distincte d'une paroi principale 30 de la chambre 2, lesdites parois principale et latérale 30, 31 étant jointes de manière étanche lorsque l'installation 1 est en fonctionnement. Ainsi, l'étanchéité doit seulement être assurée à la jonction entre les parois principale et latérales 30, 31 (et éventuellement entre deux paroi latérales 31 de deux blocs voisins), ce qui est bien plus facile qu'au niveau des tuyauteries. La qualité de l'étanchéité du la chambre 2 est améliorée pour des coûts bien moindres.

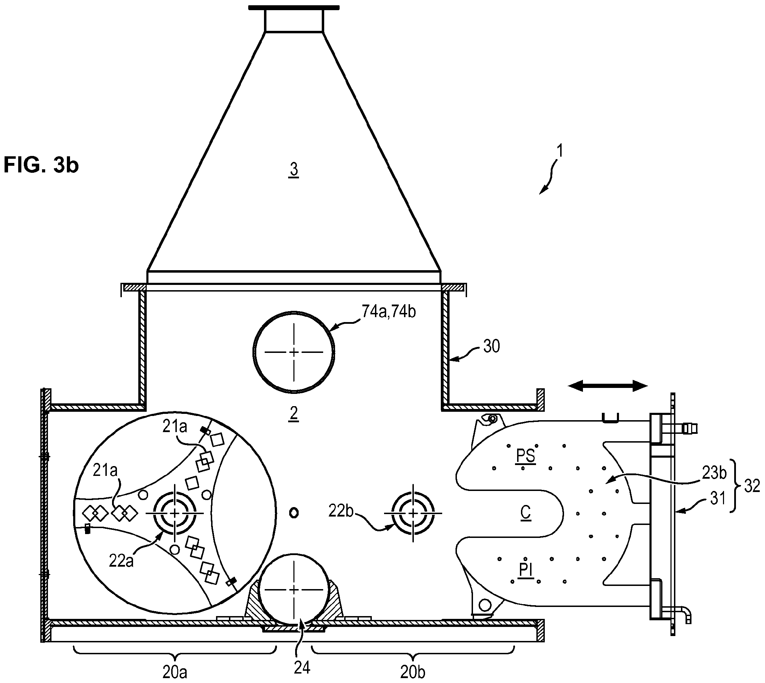

De plus, l'ensemble formé d'au moins le plateau 23a, 23b et la paroi latérale 31 (i.e. un bloc radiateur 32) est adapté pour coulisser latéralement de sorte à dégager l'arbre 22a, 22b du canal C, par exemple pour maintenance, puisque ce dernier s'étend latéralement de façon opposée à la paroi latérale 31. Cela est bien visible sur la figure 3b. Il suffit pour cela de prévoir des rails horizontaux le long desquels le plateau 23a, 23b peut glisser. Un homme seul peut effectuer cette opération, alors qu'avant il fallait une grue.

De plus, nul besoin de vider tout le circuit de vapeur 4, il suffit de fermer deux vannes au niveau des circuits communs d'entrée et de sortie de sorte à isoler le boc radiateur tout en gardant les autres « pleins ». Cela facilite largement la maintenance.

La chambre 2 comprend également une vis de recyclage 24 horizontale située sous les rotors 20a, 20b, cette dernière déplaçant vers le fond de la chambre 2 la matière séchée pour extraction.

### Circuit de vapeur

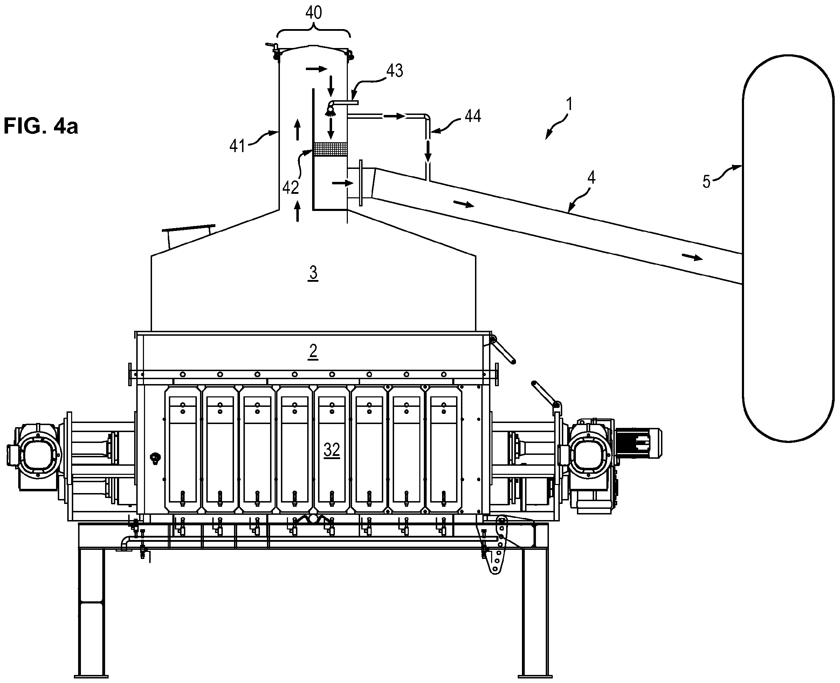

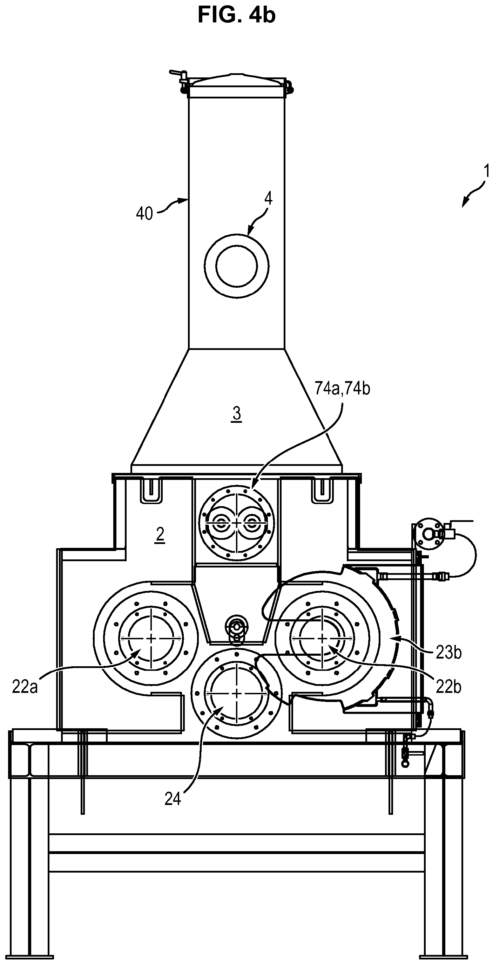

Comme expliqué, l'installation 1 comprend un circuit de vapeur 4 pour la circulation des buées issues du chauffage de ladite matière pâteuse dans la chambre 2 en référence aux **figures 4a-4b****.** Dans le mode de réalisation préféré pour la mise en oeuvre de la CMV, sur ce circuit 4 sont successivement disposés :
- des moyens d'aspiration 3 des buées ;
- des moyens de traitement 5 ;
- des moyens de compression 6 ; et
- au moins un échangeur thermique (typiquement les plateaux chauffants 23a, 23b) disposé au sein de ladite chambre 2

Les moyens d'aspiration 3 prennent globalement la forme d'une hotte au-dessus de la chambre 2 (avec une forme sensiblement tronconique), qui avec les parois principale et latérale 30, 31 définit l'enveloppe étanche de la chambre 2.

Malgré sa position bien au-dessus de la matière pâteuse, on constate que les moyens d'aspiration 3 collectent en même temps que les buées des particules solides issues du chauffage de ladite matière pâteuse (i.e. des fragments microscopiques de la matière pâteuse séchée), appelées « fines ». Très légères, elles sont entrainées par le flux de vapeur d'évaporation.

Le problème est que ces fines viennent se retrouver dans la vapeur compressée, ce qui d'une part endommage les moyens de compression 6 et d'autre part diminue les performances énergétiques de l'installation 1. Une CMV efficace nécessite une vapeur la plus pure possible. Les moyens de traitement 5 ont traditionnellement ce rôle de purification des vapeurs, mais on constate qu'ils consomment beaucoup d'énergie et ont tendance à ce boucher souvent (à cause des fines), ce qui a pour conséquence un arrêt brutal des moyens de compression 6, ce qui entraîne outre la dégradation du matériel un arrêt temporaire de l'installation 1 et des pertes d'exploitation.

Pour résoudre ce problème et faciliter la CMV, les moyens d'aspiration 3 des buées comprennent des moyens d'augmentation de pertes de charge 40. Cela peut sembler à première vue paradoxal, dans la mesure où cela nécessite une augmentation de la consommation d'énergie au niveau des moyens de compression 6 de sorte à compenser la perte de charge, mais on constate que l'augmentation locale des pertes de charge au niveau des moyens d'aspiration permet de piéger efficacement les fines. En particulier celles-ci se déposent sur les parois du fait de l'augmentation des frottements.

Et dans la mesure où les moyens d'augmentation des pertes de charge 40 sont disposés au-dessus de la chambre 2 (ce qui est naturellement le cas, au vu de la forme en « hotte » des moyens 3, les moyens d'augmentation des pertes de charge 40 formant de façon préférée un dôme à son sommet), au moins une partie desdites particules solide piégées retombe directement dans la chambre 2. En d'autres termes, le système s'autopurge. Les fines ne sont plus perdues, mais bien valorisées avec le reste de la matière séchée.

De façon préférée, les moyens d'augmentation des pertes de charge 40 présentent une paroi externe pourvue de moyens de vibration (tels qu'un piston, ou une masselotte rotative), qui « heurtent » à intervalles régulier cette paroi pour faire se décoller et retomber les fines.

Les moyens d'augmentation des pertes de charge 40 comprennent avantageusement un labyrinthe 41 et/ou un filtre 42, préférentiellement les deux. Par « labyrinthe » on entend une partie complexe et sinueuse avec des changements de direction brusques de sorte à augmenter les surfaces sur lesquelles les fines peuvent se déposer. En référence à la figure 4a, le labyrinthe 41 peut comprendre une conduite verticale ascendante suivie d'une conduite verticale descendante. En particulier, comme expliqué les moyens 40 peuvent consister en un dôme, comprenant une paroi séparatrice verticale séparant la conduite ascendante de la conduite descendante.

Le circuit de vapeur 4 s'étend latéralement depuis ladite conduite verticale descendante du labyrinthe 41 de sorte à générer un nouveau coude.

Ledit filtre 42 peut être disposé dans la conduite verticale descendante, avantageusement en combinaison avec des moyens de pulvérisation d'eau 43 dans les buées (on note que ces derniers peuvent être présents sans le filtre 42). L'idée est d'humidifier les fines restantes qui n'ont pas été piégées par la partie labyrinthe de sorte à les alourdir et les faire tomber.

Les moyens de pulvérisation d'eau 43 sont dans l'exemple disposés au-dessus du filtre 42, de sorte à avoir une vaste surface humide pour toucher toutes les fines. Le circuit de vapeur 4 est préférentiellement configuré de sorte que l'eau pulvérisée dans les buées ruisselle jusque dans les moyens de traitement 5. Il est impératif que l'eau ne puisse atteindre la chambre 2, ce qui est le cas dès que les moyens de pulvérisation 43 sont dans la conduite descendante. On note qu'un trop plein 44 permet de court-circuiter le filtre 42 et de déverser directement dans le circuit 4 de l'eau qui pourrait s'accumuler au-dessus du filtre 42 et déborder dans la chambre 2. Le circuit 4 descend quant à lui en légère pente vers les moyens de traitement 5 qui recueille l'eau liquide chargée de fines, et les buées quasi-pures.

Les moyens de traitement 5 consistent préférentiellement en un laveur qui permet de purifier la vapeur avant son introduction dans le ou les compresseurs 6. Comme l'on voit sur la figure 2, de l'eau est préférentiellement pulvérisée dans le circuit 4 juste en entrée de chaque compresseur 6. Il s'agit d'eau de « désurchauffe », qui permet de refroidir les compresseurs 6 (comme expliqué, la CMV s'accompagne d'une forte hausse de chaleur).

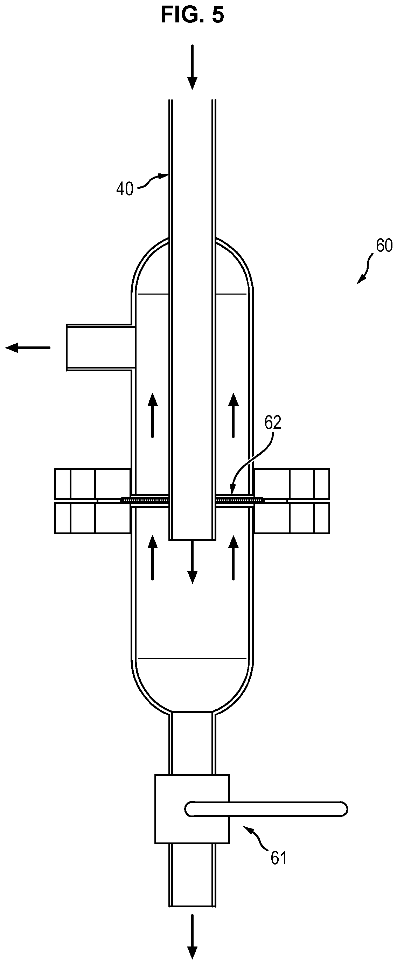

En référence à la **figure 5****,** chaque compresseur 6 est avantageusement équipé de moyens de purge 60 permettant d'éliminer cette eau de désurchauffe. Plus précisément, en sortie de chaque compresseur le circuit 4 est orienté vers le bas (avantageusement de façon sensiblement verticale) puis fait un coude. Une branche 40 du circuit 4 continue vers le bas dans le prolongement du circuit 4 avant le coude, et les moyens de purge sont disposés sur cette branche 40. En effet, par gravité l'eau liquide coule dans la branche 40 au lieu de continuer dans le circuit 4. Les moyens de purge 60 constituent ainsi un point bas local. Les présents moyens de purge 60 sont en outre configurés pour éliminer les éventuels traces de fines qui resteraient à ce moment dans le circuit 4 tout en évitant les fuites qui nuiraient à la décompression de vapeur.

Ces moyens 60 présentent préférentiellement une conduite verticale descendante (branche 40 du circuit 4) suivie d'une conduite verticale ascendante. Plus précisément, la conduite ascendante entoure la conduite descendante à la manière d'une bouteille dans laquelle est insérée une paille. La partie basse est remplie d'eau provenant des compresseurs 6, cette eau formant un bouchon aux gaz, et agissant ainsi comme moyen d'étanchéité. Une hausse de la quantité d'eau dans les moyens 60 fait que la surface de l'eau atteint le haut de la conduite ascendante, au niveau de laquelle on trouve une sortie par débordement, connectée fluidiquement aux moyens de traitement 5 qui recueillent l'eau liquide. La conduite verticale ascendante des moyens de traitement 5 comprend un filtre 52, qui définit approximativement la séparation entre les parties basse et haute des moyens 5, et permet de contenir des éventuelles dernières fines qui auraient réussi à traverser les moyens de traitement 5.

Le niveau de boues (i.e. de fines mélangée à l'eau) en partie basse est préférentiellement contrôlé, et pour cela on trouve des moyens de vidange 51 tout en base de la « bouteille », i.e. en bas de la conduite verticale descendante. Les moyens de vidange 51 peuvent être automatisés pour maintenir un niveau sensiblement constant.

### Injection de matière pâteuse

L'installation 1 comprend un dispositif d'introduction sous pression 7 de ladite matière pâteuse dans la chambre 2. La matière pâteuse est ainsi déversée dans la chambre 2 en partie haute via des injecteurs 74a, 74b du dispositif d'introduction sous pression 7, i.e. des buses qui dispersent la matière dans la chambre 2 pour un meilleur séchage.

Comme expliqué, ce dispositif 7 est un composant critique pour l'étanchéité de la chambre 2. Il ne doit injecter que la matière pâteuse et aucun gaz pour le bon fonctionnement de la CMV. Inversement, la chambre 2 ne doit pas fuiter via son entrée de matière pâteuse.

Dans ce but on connait des systèmes d'injection haute pression qui tentent de prévenir l'entrée/sortie d'air. On constate que les fines buses de pulvérisation de ces systèmes ont tendance à se boucher, car la matière pâteuse n'est pas homogène (présence possible d'agglomérats). Cela entraîne des opérations de maintenance pour débouchage qui sont longues et complexes.

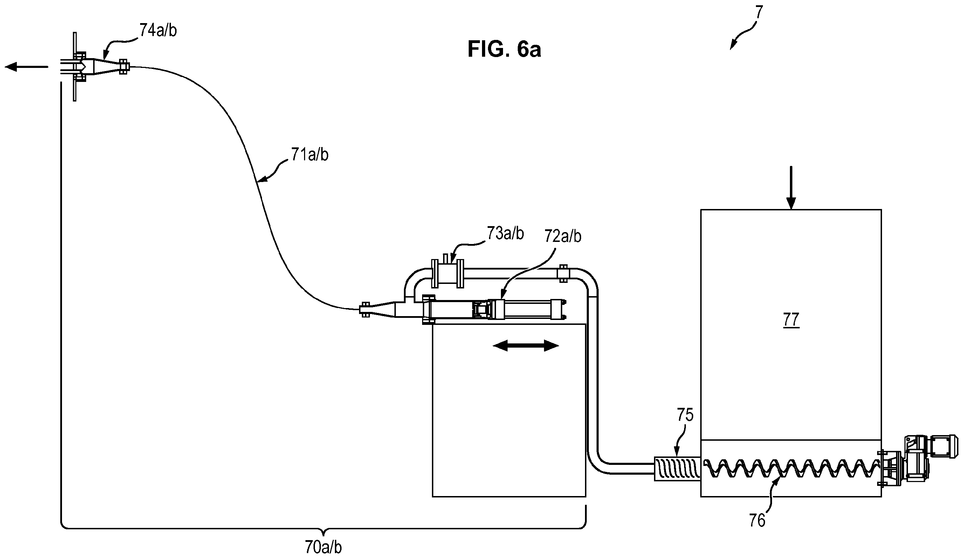

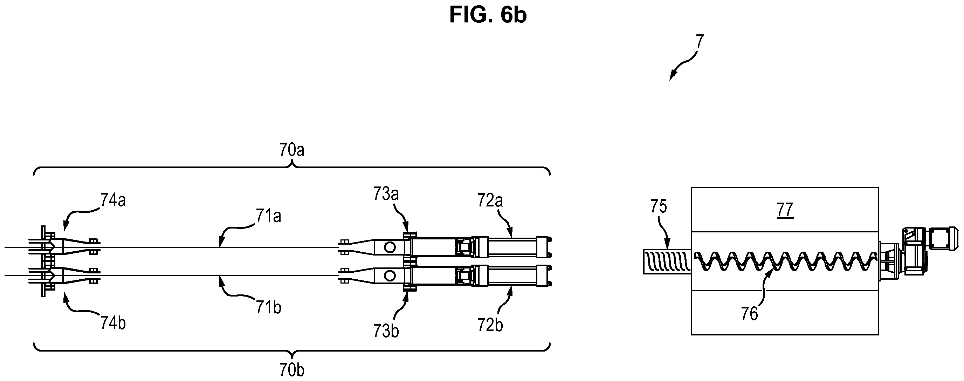

La présent installation optimisée 1 présente pour résoudre cela un dispositif d'introduction sous pression 7 innovant, conforme aux figures 6a-6c.

Ce dernier comprend un premier et un deuxième ensemble d'introduction 70a, 70b, typiquement un ensemble gauche et un ensemble droite. Ils sont identiques.

Chacun comprend un circuit de matière pâteuse 71a, 71b sur lequel sont successivement disposés un vérin 72a, 72b, une vanne 73a, 73b d'admission de matière pâteuse et un injecteur 74a, 74b débouchant dans la chambre 2.

Les deux vérins 72a, 72b et les deux vannes 73a, 73b sont actionnés de façon coordonnée de sorte à ce que lorsque un ensemble d'introduction 70a, 70b reçoit de matière pâteuse via sa vanne 73a, 73b, l'autre ensemble d'introduction 70a, 70b injecte de matière pâteuse dans la chambre 2 via son injecteur 74a, 74b.

En d'autres termes, la matière pâteuse est injectée en permanence dans la chambre 2 via le fonctionnement en alternance des deux ensembles d'introduction 70a, 70b. A tout instant (du fonctionnement), l'un est en remplissage alors que l'autre est en compression, les vannes 73a, 73b agissant comme des clapets anti-retour. Plus précisément, la matière à haute pression bloquée dans les circuits 71a, 71b agit comme des bouchons qui assurent en permanence une étanchéité absolue.

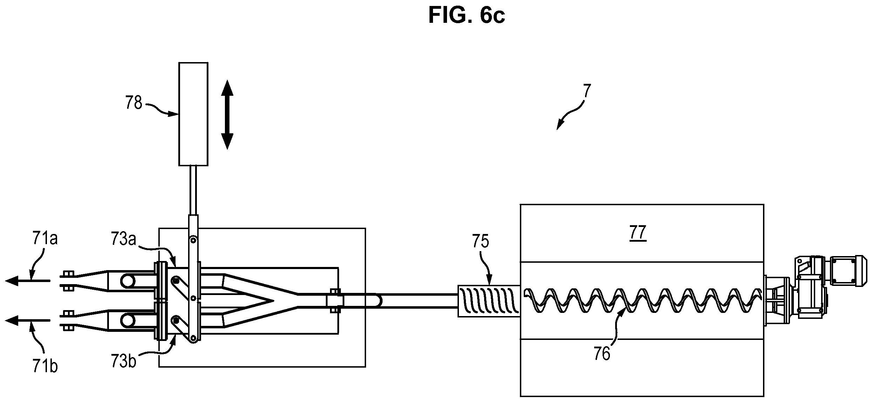

Plus précisément, les vannes 73a, 73b sont ouvertes puis fermées périodiquement de façon coordonnée de sorte que l'ouverture de l'une coïncide avec la fermeture de l'autre. Cela est par exemple obtenu par un piston 78 visible sur la figure 6c, qui à intervalles réguliers change simultanément l'état des deux vannes 73a, 73b. Ainsi, à tout instant l'une est ouverte et l'autre est fermée. De façon préférée le cycle est symétrique, c'est-à-dire que chaque vanne 73a, 73b est ouverte autant que l'autre.

Et le dispositif d'introduction sous pression 7 comprend un compresseur 75 approvisionnant en commun et en continu les deux vannes 73a, 73b en matière pâteuse, par exemple via une canalisation en « Y », de sorte qu'à tout instant l'unique ensemble d'introduction 70a, 70b dont la vanne 73a, 73b est ouverte reçoit de matière pâteuse via sa vanne 73a, 73b. Comme expliqué, à tout instant une vanne 73a, 73b et une seule est ouverte, et la matière pâteuse peut être approvisionnée en continu. L'absence d'intermittence à ce niveau garantit que la canalisation en Y est en permanence plein de matière pâteuse sans possibilité à l'air de passer.

Le dispositif d'introduction sous pression 7 peut en outre comprendre une cuve 77 de stockage de matière pâteuse et une vis sans fin 76 disposée dans ladite cuve 77 pour le transfert de la matière pâteuse vers le compresseur 75.

Les vérins 72a, 72b sont des pistons réalisant des allers-retours dans leur circuit 71a, 71b (i.e. présentant un moment périodique oscillant, synchrone avec celui des vannes 73a, 73b). Plus précisément, les vérins 72a, 72b et la vanne 73a, 73b de chaque ensemble d'introduction 70a, 70b sont actionnés de façon coordonnée de sorte à ce que le vérin 72a, 72b augmente la pression dans le circuit de matière pâteuse 71a, 71b lorsque la vanne 73a, 73b est fermée, et diminue la pression dans le circuit de matière pâteuse 71a, 71b lorsque la vanne 73a, 73b est ouverte.

On obtient un cycle à deux temps :
- dans le premier temps, la première vanne 73a est fermée et le premier vérin 72a avance. La pression augmente fortement dans le premier circuit 70a (jusqu'à plus de 100 bar, voir 200 bar) car et la matière pâteuse est pulvérisée par le premier injecteur 74a. A ces niveaux de pression, tout agglomérat qui bloquerait l'injecteur 74a est instantanément broyé, tout bouchage est impossible. Simultanément, la deuxième vanne 73b est ouverte et le deuxième vérin 72b recule. Dans la mesure où le compresseur 75 continue d'amener de la matière pâteuse aux vannes 73a, 73b et que seulement la deuxième est ouverte, cette matière est forcée d'occuper la place libérée par le deuxième vérin 72b.
- Les vannes 73a, 73b changent de position, et les vérins 72a, 72b changent de sens de déplacement, et dans un deuxième temps on fait exactement les mêmes opérations en inversant les rôles du premier et du deuxième ensemble 70a, 70b.

On obtient comme expliqué un fonctionnement en continu, avec une étanchéité absolue, et une impossibilité physique de blocage.

### Extraction de la matière séchée

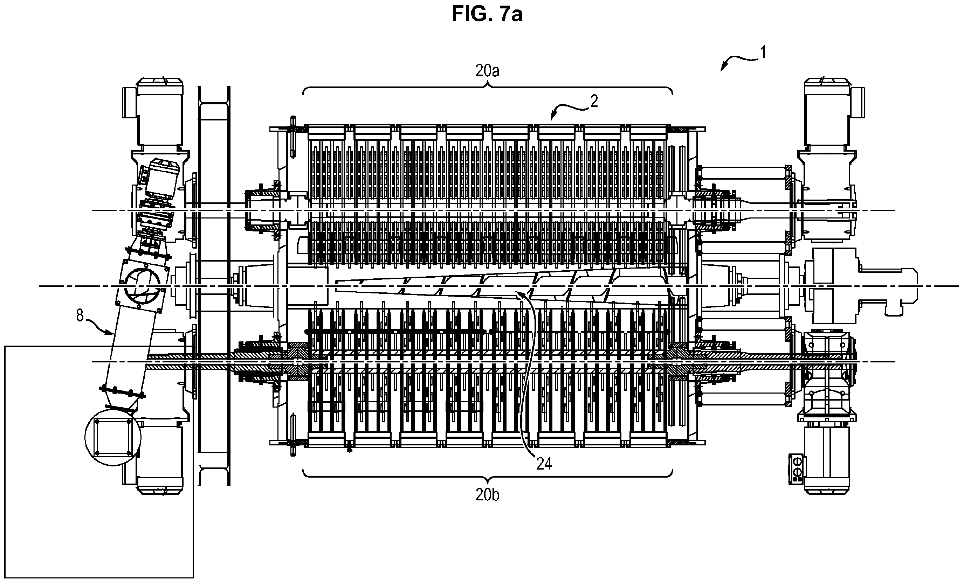

L'installation 1 comprend des moyens de conditionnement 8 de ladite matière pâteuse séchée issue de la chambre 2. Comme représenté sur la **figure 7a****,** ces moyens de conditionnement 8 sont en partie arrière de la chambre et récupère la matière séchée poussée par la vis 24, ce qui est facilité par une légère pente vers l'arrière de la chambre 2.

Comme expliqué, ces moyens 8 sont également un composant critique pour l'étanchéité de la chambre 2. Ils ne doivent extraire que la matière pâteuse séchée et ne laisser entrer aucun gaz pour le bon fonctionnement de la CMV.

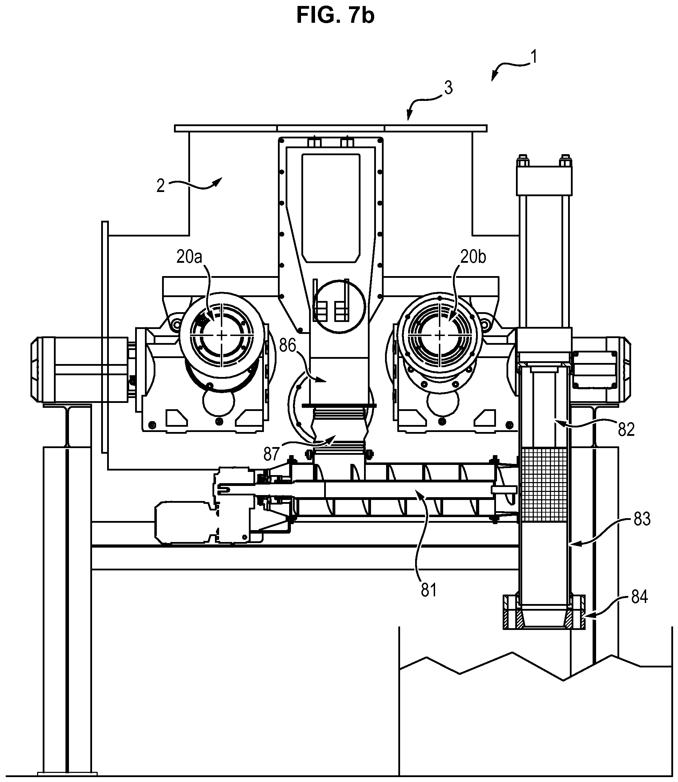

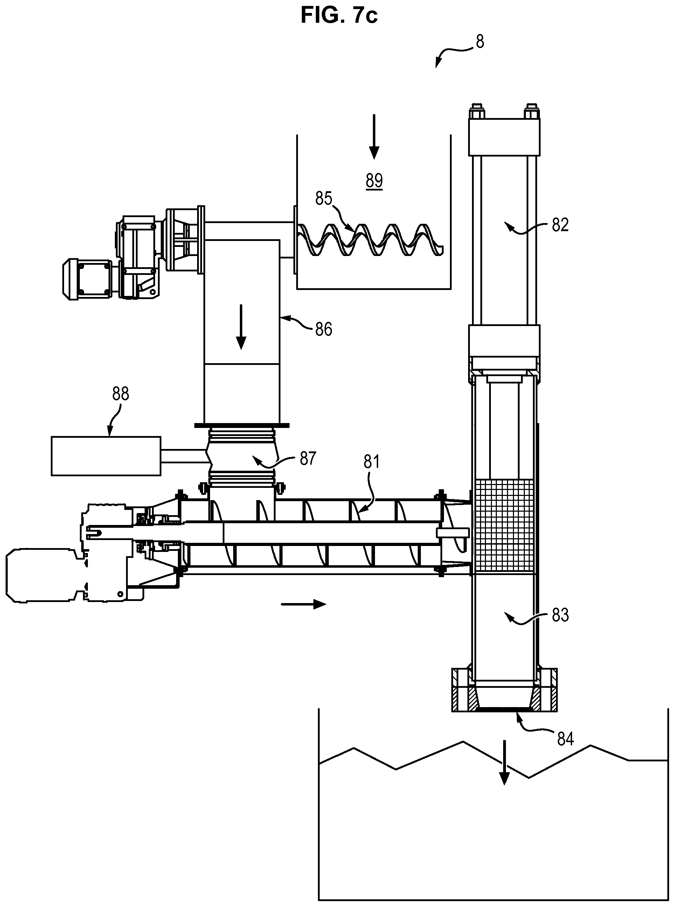

En référence aux **figures 7b** **et** **7c****,** les moyens de conditionnement 8 comprennent un vérin d'extrusion 82 d'axe sensiblement vertical et orienté vers le bas, une vis de gavage 81 alimentant le vérin d'extrusion 82, et une chambre de gavage 83 prolongeant l'extrémité du vérin d'extrusion 82.

Le vérin 82 est orienté dans le sens de la gravité. Plus précisément, il comprime la matière séchée en la poussant vers le bas, c'est-à-dire vers la chambre de gavage 83. Cette dernière consiste en une prolongation du vérin 82 recevant de la matière séchée compressée. Comme pour le dispositif d'introduction 7 de la matière pâteuse, l'idée est d'utiliser la longueur de la chambre de gavage 83 comme bouchon de matière prévenant l'entrée/sortie de gaz.

De façon préférée, la chambre de gavage 83 comprend des moyens d'augmentation des pertes de charge 84 de sorte à faciliter la génération du bouchon. Plus les pertes de charges sont élevées, plus la matière sera tassée, et plus elle tiendra malgré la gravité. Comme représenté sur la figure 7c, lesdits moyens d'augmentation des pertes de charge 84 consistent en une grille d'extrusion, i.e. une filière, dans laquelle la matière séchée doit passer de force. Cela compacte complètement la matière séchée, qui peut être pelletisée : à chaque descente du vérin 82 (et donc à chaque progressions du bouchon vers le bas), des moyens de pelletisation de la matière pâteuse séchée en sortie de ladite grille d'extrusion 84 peuvent trancher la « carotte » qui dépasse pour obtenir un pellet. Ces derniers constituent un conditionnement optimal permettant à la matière séchée d'être transportée, valorisée, etc.

La vis de gavage 81 est une vis sans fin fonctionnant par intermittence, cette dernière et le vérin d'extrusion 82 sont actionnés de façon coordonnée de sorte à remplir le vérin 82 lorsqu'il est en position haute.

Plus précisément, lorsque le vérin 82 descend il fait progresser le bouchon de matière compactée dans la chambre de gavage 83, qui freine sa descente, la vis 81 étant alors arrêtée. Ensuite le vérin 82 remonte, sans le bouchon qui reste là où il est sous l'effet de la gravité et des forts frottements dus au compactage. Il y a alors du vide au sommet du bouchon, vide qui est rempli par de la matière (encore non tassée), apportée par la vis 81 qui se met en marche. Cette nouvelle matière sera ensuite tassée par le vérin 82 de sorte à accroitre le bouchon, etc. Cela garantit une étanchéité parfaite tout en facilitant le conditionnement de la matière séchée.

On note que la chambre 2 fournit de la matière séchée en continu, alors que la vis de gavage 81 fonctionne par intermittence. Pour régler ce problème, on adjoint une vis auxiliaire 85 apportant en continu de la matière pâteuse séchée depuis la chambre 2 (plus précisément de puis une trémie 89 en sortie de la chambre 2) vers une conduite verticale 86 au-dessus de la vis de gavage 81. La vis auxiliaire 85 agit comme une première barrière d'étanchéité empêchant l'air de la chambre 2 d'accéder à la conduite verticale 86, qui sert de « silo » de stockage pour la vis de gavage 81

A l'instar des moyens d'augmentation des pertes de charge 40 du circuit de vapeur 4, ladite conduite verticale 86 peut présenter une zone 87 au moins partiellement souple. Cela permet d'ajouter aux moyens de conditionnement 8 comprennent des moyens de vibration 88 de ladite zone souple 87 de la conduite verticale 86. En effet, comme la vis de gavage 81 ne fonctionne pas en continu, la matière séchée qui s'accumule en permanence dans la conduite verticale peut « voûter », c'est-à-dire se stabiliser selon une forme en ogive qui l'empêche de tomber, et ne permet plus d'alimenter la vis de gavage 81 qui tourne dans le vide. Il n'y a pas de risque d'entrée d'air (comme le bouchon reste en place dans la chambre de gavage 83), mais la matière séchée ne sort plus. La vibration de la zone souple 87 permet de faire écrouler toute potentielle voûte en construction de sorte à garantir l'arrivée de la matière dans la vis 81, et la production de pellets de façon constante.

## Revendications

1. Installation thermique (1) de séchage de matière pâteuse, comprenant une chambre (2) recevant ladite matière pâteuse, dans laquelle est disposée au moins une paire de rotors (20a, 20b) disposés côte à côte comprenant chacun un arbre (22a, 22b) portant des bras (21a, 21b) qui tournent entre des plateaux chauffant (23a, 23b) en les raclant,
au moins un plateau chauffant (23a, 23b) étant un échangeur thermique creux au sein duquel circule un fluide caloporteur, et présentant une forme concave définissant un canal (C) sensiblement radial pour le passage transversal d'un arbre (22a, 22b) ;
l'installation (1) étant **caractérisée** en ce ledit canal (C) s'étend sensiblement latéralement de sorte à définir au sein du plateau chauffant (23a, 23b) une partie supérieure (PS) et une partie inférieure (PI) séparées par ledit canal (C), dont l'une présente une entrée du fluide caloporteur, et l'autre présente une sortie de fluide caloporteur, lesdites entrée et sorties de fluide caloporteur s'étendant sensiblement latéralement de façon opposée au canal (C).

2. Installation selon la revendication 1, dans laquelle ledit plateau (23a, 23b) présente sensiblement une forme en « C ».

3. Installation selon l'une des revendications 1 et 2, dans ledit plateau (23a, 23b) est solidaire d'une paroi latérale (31) de la chambre (2), traversée par lesdites entrée et sortie de fluide caloporteur du plateau (23a, 23b).

4. Installation selon la revendication 3, dans laquelle ladite paroi latérale (31) est une paroi mobile distincte d'une paroi principale (30) de la chambre (2), lesdites parois principale et latérale (30, 31) étant jointes de manière étanche lorsque l'installation (1) est en fonctionnement.

5. Installation selon la revendication 4, dans laquelle l'ensemble formé d'au moins le plateau (23a, 23b) et la paroi latérale (31) est adaptée pour coulisser latéralement de sorte à dégager l'arbre (22a, 22b) du canal (C).

6. Installation selon la revendication 5, comprenant une pluralité de blocs radiateurs (32) chacun constitué d'une pluralité de plateaux (23a, 23b) identiques et d'une paroi latérale (31).

7. Installation selon l'une des revendications 1 à 6, dans laquelle ledit fluide caloporteur est un fluide à changement de phase se condensant au moins partiellement dans les plateaux (23a, 23b).

8. Installation selon la revendication 7, dans laquelle la partie supérieure (PS) du plateau chauffant (23a, 23b) présente une entrée du fluide caloporteur, et la partie inférieure (PI) du plateau chauffant (23a, 23b) présente une sortie de fluide caloporteur.

9. Installation selon l'une des revendications 7 et 8, dans laquelle ledit fluide caloporteur est de la vapeur d'eau.

10. Installation selon la revendication 9, dans laquelle ladite vapeur d'eau provient des buées issues du chauffage de ladite matière pâteuse, l'installation comprenant un circuit de vapeur (4) sur lequel sont disposés successivement :
- des moyens d'aspiration (3) des buées depuis la chambre (2) ;
- des moyens de compression (6) ;
- les plateaux chauffants (23a ; 23b).

## Patentansprüche

1. Wärmeanlage (1) zum Trocknen einer pastösen Masse, umfassend eine Kammer (2), welche die pastöse Masse aufnimmt, in welcher mindestens ein Paar von Rotoren (20a, 20b) angeordnet ist, die nebeneinander angeordnet sind, umfassend jeweils eine Welle (22a, 22b), die Arme (21a, 21b) trägt, die zwischen Heizplatten (23a, 23b) drehen und sie dabei abkratzen,
wobei mindestens eine Heizplatte (23a, 23b) ein hohler Wärmetauscher ist, worin ein Wärmeträgerfluid zirkuliert, und eine konkave Form aufweist, die einen etwa radialen Kanal (C) für den transversalen Durchgang einer Welle (22a, 22b) definiert;
wobei die Anlage (1) **dadurch gekennzeichnet ist, dass** sich der Kanal (C) etwa seitlich derart erstreckt, dass in der Heizplatte (23a, 23b) ein oberer Teil (PS) und ein unterer Teil (PI) definiert werden, die durch den Kanal (C) getrennt sind, von denen einer einen Einlass des Wärmeträgerfluids aufweist und der andere einen Wärmeträgerfluidauslass aufweist, wobei sich der Wärmeträgerfluideinlass und -auslass etwa seitlich gegenüber dem Kanal (C) erstrecken.

2. Anlage nach Anspruch 1, wobei die Platte (23a, 23b) etwa C-förmig ist.

3. Anlage nach einem der Ansprüche 1 und 2, wobei die Platte (23a, 23b) mit einer Seitenwand (31) der Kammer (2) fest verbunden ist, die von dem Wärmeträgerfluideingang und -ausgang der Platte (23a, 23b) durchquert wird.

4. Anlage nach Anspruch 3, wobei die Seitenwand (31) eine bewegliche Wand ist, die sich von einer Hauptwand (30) der Kammer (2) unterscheidet, wobei die Haupt- und Seitenwand (30, 31) dicht miteinander verbunden sind, wenn die Anlage (1) arbeitet.

5. Anlage nach Anspruch 4, wobei die von mindestens der Platte (23a, 23b) und der Seitenwand (31) gebildete Einheit ausgebildet ist, um seitlich derart zu gleiten, dass die Welle (22a, 22b) vom Kanal (C) freigegeben wird.

6. Anlage nach Anspruch 5, umfassend eine Vielzahl von Radiatorblöcken (32), wobei jeder von einer Vielzahl identischer Platten (23a, 23b) und von einer Seitenwand (31) gebildet ist.

7. Anlage nach einem der Ansprüche 1 bis 6, wobei das Wärmeträgerfluid ein Phasenwechselfluid ist, das mindestens teilweise in den Platten (23a, 23b) kondensiert.

8. Anlage nach Anspruch 7, wobei der obere Teil (PS) der Heizplatte (23a, 23b) einen Einlass des Wärmeträgerfluids aufweist, und der untere Teil (PI) der Heizplatte (23a, 23b) einen Wärmeträgerfluidauslass aufweist.

9. Anlage nach einem der Ansprüche 7 und 8, wobei das Wärmeträgerfluid Wasserdampf ist.

10. Anlage nach Anspruch 9, wobei der Wasserdampf von Brüden stammt, die beim Erwärmen der pastösen Masse entstehen, wobei die Anlage einen Dampfkreis (4) umfasst, auf dem aufeinanderfolgend angeordnet sind:
- Ansaugmittel (3) der Brüden aus der Kammer (2);
- Kompressionsmittel (6);
- die Heizplatten (23a; 23b).

## Claims

1. A thermal installation (1) for drying pasty material, comprising a chamber (2) receiving said pasty material, in which is disposed at least one pair of rotors (20a, 20b) disposed side by side each comprising a shaft (22a, 22b) bearing arms (21a, 21b) which rotate between heating plates (23a, 23b) while scraping them,
at least one heating plate (23a, 23b) being a hollow heat exchanger within which circulates a heat transfer fluid, and having a concave shape defining a substantially radial channel (C) for the transverse passage of a shaft (22a, 22b);
the installation (1) being **characterized in that** said channel (C) extends substantially laterally so as to define within the heating plate (23a, 23b) an upper portion (PS) and a lower portion (PI) separated by said channel (C), one of which has a heat transfer fluid inlet, and the other has a heat transfer fluid outlet, said heat transfer fluid inlet and outlet extending substantially laterally opposite to the channel (C).

2. The installation according to claim 1, wherein said plate (23a, 23b) has substantially a "C" shape.

3. The installation according to one of claims 1 and 2, wherein said plate (23a, 23b) is integral with a side wall (31) of the chamber (2), said heat transfer fluid inlet and outlet of the plate (23a, 23b) passing through it.

4. The installation according to claim 3, wherein said side wall (31) is a movable wall distinct from a main wall (30) of the chamber (2), said main and side walls (30, 31) being sealingly joined when the installation (1) is in operation.

5. The installation according to claim 4, wherein the assembly formed by at least the plate (23a, 23b) and the side wall (31) is suitable for sliding laterally so as to disengage the shaft (22a, 22b) from the channel (C).

6. The installation according to claim 5, comprising a plurality of radiator blocks (32), each consisting of a plurality of identical plates (23a, 23b) and a side wall (31).

7. The installation according to one of claims 1 to 6, wherein said heat transfer fluid is a phase-change fluid condensing at least partially in the plates (23a, 23b).

8. The installation according to claim 7, wherein the upper portion (PS) of the heating plate (23a, 23b) has a heat transfer fluid inlet, and the lower portion (PI) of the heating plate (23a, 23b) has a heat transfer fluid outlet.

9. The installation according to one of claims 7 and 8, wherein said heat transfer fluid is water vapor.

10. The installation according to claim 9, wherein said water vapor originates from the mists resulting from the heating of said pasty material, the installation comprising a steam circuit (4) on which are successively disposed:
- aspiration means (3) for the mists from the chamber (2);
- compression means (6);
- the heating plates (23a; 23b).
